# EUROPEAN PATENT SPECIFICATION

(11) **EP 3 078 448 B1**
(45) Date of publication and mention of the grant of the patent: **11.07.2018**
(21) Application number: 15163259.3
(22) Date of filing: 10.04.2015
(51) Int. Cl.: B23P 13/02, B24B 41/06, F01D 25/26, F01D 25/24

(54) **METHOD FOR MACHINING A CASING FOR A TURBO ENGINE.**
VERFAHREN ZUR BEARBEITUNG EINES GEHÄUSES FÜR EINE TURBOMASCHINE.
PROCÉDÉ D'USINAGE D'UN CARTER POUR UNE TURBOMACHINE.

(43) Date of publication of application: 12.10.2016
(73) Proprietor: Rolls-Royce Deutschland Ltd & Co KG, 15827 Blankenfelde-Mahlow (DE)
(72) Inventor: Booth, Richard, 10117 Berlin (DE)
(74) Representative: Maikowski & Ninnemann Patentanwälte Partnerschaft mbB

(56) References cited:
- EP-A1- 2 829 353
- DE-A1- 3 542 073
- DE-A1-102012 100 503
- US-A- 5 063 661
- US-A1- 2011 280 721
- US-B1- 6 409 471

## Description

The invention relates to a method for machining a casing for a turbo engine according to claim 1.

In turbo engines, in particular aircraft turbo engines, casings are required to separate different regions within the turbo engine from each other. Those casings generally have a shape which is rotationally symmetric, in particular cylindrical or conical to cover for example the compressor and/or the turbine within the turbo engine. Within these casings rotary devices like compressors and turbines are positioned. It is important that the clearance between the casing and the encased parts (e.g. rotary parts such as turbine blades) is kept as small as possible. Therefore, compressor casing liners, stator vane tips and shroud seals are typically machined during the assembly procedure to minimize tolerance effects and to minimize the clearances. Those casings are put into tooling fixtures and are machined typically by for example turning and grinding.

Casings manufactured this way undergo certain deformations during operation of the turbo engine (e.g. in flight) which decreases the efficiency of the turbo engine.

DE 35 42 073 A1 and US 5 063 661 A show methods for machining in a stressed state a casing for a turbo engine.

Therefore, methods for manufacturing turbo engine casings for more efficient performance are required. The invention provides such a method comprising the features of independent claim 1. Preferred embodiments are stated in the dependent claims.

In a first step at least one blank part for a casing is positioned in a tooling fixture. The tooling fixture can e.g. allow a fixed positioning of the at least one blank part relative to tools and / or a tool machine.

Then, the at least one blank part is mechanically stressed by at least one locally applied force through at least one deformation device into a predetermined stress status, the tooling fixture maintaining the stress status in the at least one blank part. The at least one locally applied force deforms the at least one blank part in a predetermined way resulting in a predetermined stress status.

The mechanical stressing of the at least one blank part is determined by a data processing unit using input data from finite element models, isothermal models or thermal models. The models can determine which deformations might occur in operation. Therefore, it is possible to compute and generate local forces to provide a predetermined stress status in the at least one blank part, anticipating the deformation under operational conditions. Alternatively or additionally the mechanical stressing of the at least one blank part is determined by the data processing unit using input data obtained from predetermined data, in particular experimental data, theoretical analysis and / or simulation data conducted with and / or obtained from with the casing of the turbo engine.

The data processing unit is used to control the movement of the deformation device.

In this predetermined stress status the at least one blank part is subjected to a machining process.

After the completion of the machining process, the predetermined stress status is released so that the machined part (i.e. the casing) takes on the shape determined by the internal stress without the at least one locally applied force.

So the machining of the blank part for the casing takes place under a certain predetermined stress in the blank part. If the force or forces responsible for the stressing are removed after the machining, the machined part takes on a form governed by the internal stress status in the now machined part. If the machined part is subjected in operation of the turbo engine to forces similar to the predetermined stress status, the form of the machined part returns to that shape. If e.g. a well-defined round shape was machined under the predetermined stress, this well-defined round shape will reappear in operation. So it is possible to take into account deformations in the casing which will occur in operation of the turbo engine.

In an embodiment in addition a tool of a tool machine can be mechanically stressed by at least one locally applied force into a predetermined stress status.

In an embodiment the casing is a part of a turbo engine, in particular an aircraft engine or a gas turbine.

In a further embodiment the machining process is a turning process, a milling process, a lapping process, a honing process and / or a grinding process. All these processes can be used to give the casing shape required in operation of the turbo engine.

The mechanical stressing of the at least one blank part can e.g. be performed by at least one force with a point load and / or at least one force with an area load through the at least one deformation device. The choice of a point load or an area load depends on the stress status which is to be achieved within the at least one blank part.

Embodiments of the method can use as the at least one deformation device a hydraulic device, a pneumatic device and / or a mechanical device, in particular a screw device.

In one embodiment of the method the predetermined stress status in the at least one blank part comprises at least one local deformation between 0,05 and 1,5 mm. In another embodiment the at least one blank part is subjected to a mechanical stress by forces in at least two points, and preferably up to 8 points. In any case the deformation do not have to be symmetrical around the circumference of the casing.

In one embodiment the at least one blank part is subjected to mechanical stress essentially perpendicular to the surface of the casing. In this case, the forces act essentially on the at least one blank part in a perpendicular direction to the surface.

It is possible that the at least one blank part is subjected to mechanical stress from the outside pointing towards the inside of the at least one blank part and / or from the inside of the at least one blank part pointing towards the outside. With this arrangement, complex stress situations can be imposed on the at least one blank part.

The at least one blank part forms the basis for the manufactured casing which in one embodiment has essentially a cylindrical shape, in particular with a circular cross-section or the shape of a part of the cylindrical shape.

Exemplary embodiments of the invention are shown in the Figures:
- Fig. 1: showing a detail view of a casing of an aircraft turbo engine;
- Fig. 2A: showing a blank of the casing within the tooling fixture;
- Fig. 2B: showing the casing of Figure 1A without the tooling fixture with applied deformation forces to obtain a predetermined stress state;
- Fig. 2C: showing a casing in a tool machine for machining the casing;
- Fig. 2D: showing the casing after the release of the deformation forces in a stress state after the machining;
- Fig. 3A: showing a schematic cross-sectional view of a pre-stressing step;
- Fig. 3B: showing a schematic cross-sectional view of a casing after a machining step;
- Fig. 3C: showing a schematic cross-sectional view of a casing under operation;
- Fig. 4: showing a cross-sectional view of a deformation device with a casing;
- Fig. 5: showing a detail view of a casing with different features.

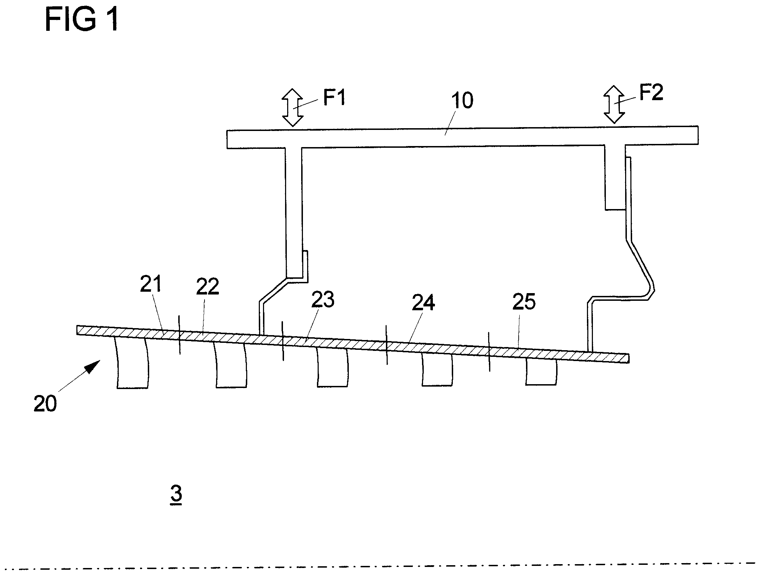

Fig. 1 shows a view of a section of a compressor casing 20 of an aircraft turbo engine with a rotational axis indicated. The complete casing 20 is build up from individual sections, i.e. casing elements 21, 22, 23, 24, 25 which are held together by bolted connections. In other embodiments a so-called 'split' case design is used, i.e. a casing 20 which comprises multistage components but is made up of two 180 degree half shells. In other embodiments the casings could be segmented casings i.e. where the casing liner (or rotor path) is split into (typically) 4, 6 or 8 segments and held within a ring casing.

In the design of an aircraft turbo engine these individual casing elements 21, 22, 23, 24 25 form rings which together enclose e.g. the compressor stages of the turbo engine as a casing 20. In a similar manner casings 20 can enclose other parts of the turbo engine, like for instance the turbine stages and / or the combustion chambers of the aircraft turbo engine.

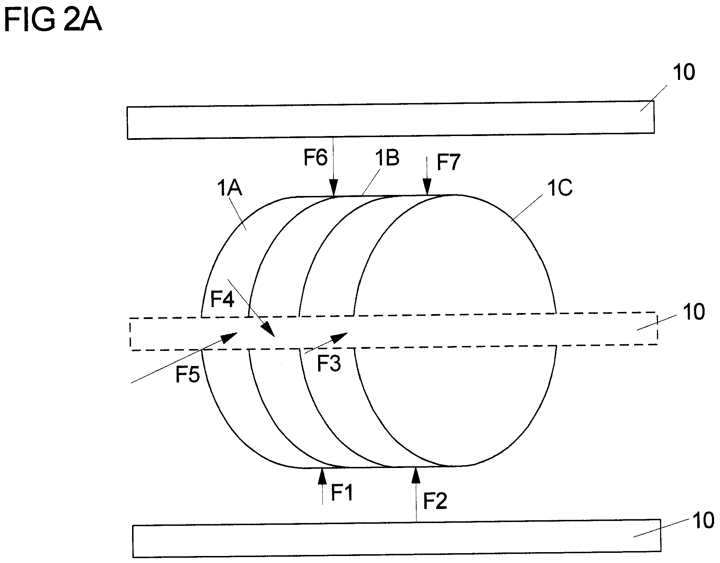

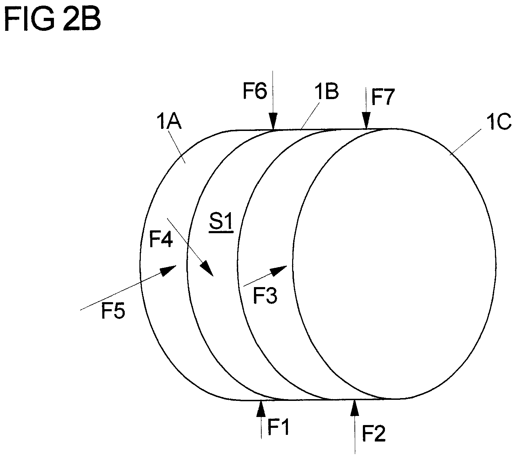

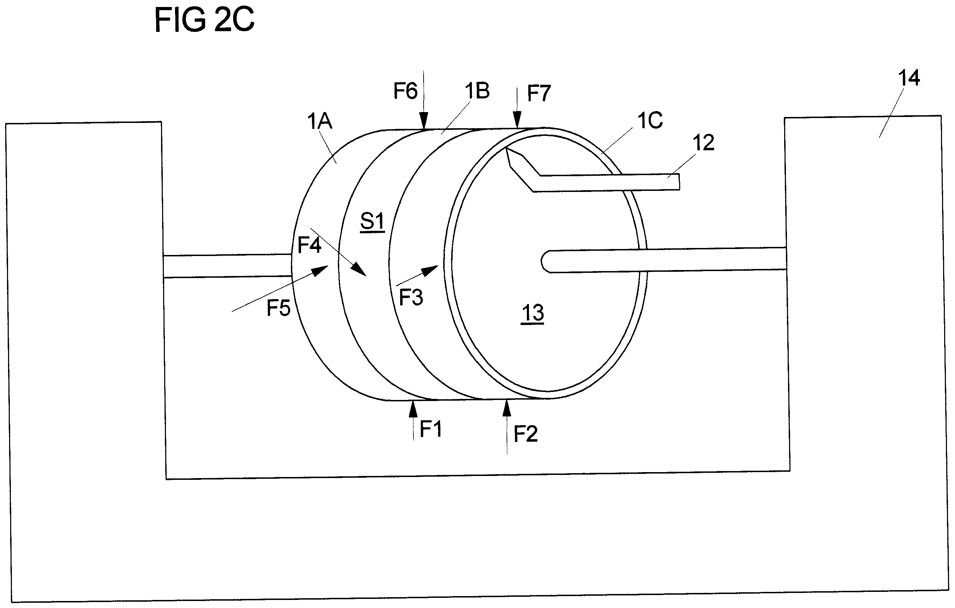

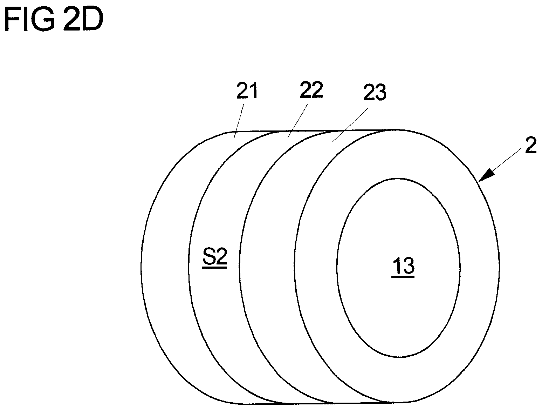

In Fig. 1 a part of a tooling fixture 10 is shown which is attached in two points to the casing elements 21, 22, 23, 24, 25 to exert point like forces F1, F2. The purpose of the tooling fixture 10 will be explained below in Fig. 2. In Fig. 1 one way of interfacing a tooling fixture 10 with casing elements 21, 22, 23, 24, 25 is shown, i.e. tooling fixture 10 is releasable screwed to casing elements 21, 22, 23, 24, 25. In those locations forces F1, F2 are pressed onto the casing elements 21, 22, 23, 24, 25 which are assembled to form the casing 20.

It should be noted that the design of these particular casing elements 21, 22, 23, 24, 25 in Fig. 1 is just an example. Other parts of the turbo engine might require differently shaped casings 20. Furthermore, the embodiments shown here are aircraft turbo engines. Other embodiments relate to stationary turbo engines like gas turbines.

In Fig. 2A to 2D different steps in an embodiment of a method to manufacture a casing 20 for the turbine engine 1 are shown.

Fig. 2A shows three blank parts 1A, 1B, 1C fixed in a tooling fixture 10 with three essentially horizontally positioned beams. In another embodiment differently shaped tooling fixtures 10 can be used. The tooling fixtures 10 allow the defined exertion of forces F1, F2, F3, F4, F5, F6, F7 to a blank part 10 to obtain a defined deformation (not shown here) resulting in a defined mechanical stress status S1 (see Fig. 2B). The blank parts 1A, 1B, 1C can be fastened within the tooling fixture 10 while the forces F1, F2, F3, F4, F5, F6, F7 act upon the blank parts 1A, 1B, 1C. The blank parts 1A, 1B, 1C can be moved with the tooling fixture 10 in place so that different machining steps are possible with a pre-defined mechanical stress status S1.

In Fig. 2A for the sake of simplicity thee parts of the tooling fixtures 10 are shown, one at the bottom, one in the middle and one at the top. From each part of the tooling fixture 10 forces F1, F2, F3, F4, F5, F6, F7 are exerted in predefined directions and magnitudes on the blank parts 1A, 1B, 1C. In other embodiments, the number of forces F1, F2, F3, F4, F5, F6, F7 acting on the blank parts 1A, 1B, 1C and their size and / or direction can be different.

The blank parts 1A, 1B, 1C will become the casing 20 or casing element 21, 22, 23 after further processing steps (see Fig. 2D).

In the embodiment shown in Fig. 2A the blank parts 1A, 1B, 1C comprise three relatively flat (i.e. low length to diameter ratio) cylindrical elements with an essentially circular cross-section. In other embodiments the blank parts 1A, 1B, 1C can have different shapes and length to diameter ratios and different cross-sections, e.g. polygonal. In principle it is possible that the blank parts 1A, 1B, 1C for the casing elements 21, 22, 23 each have different size and shape.

In Figure 2B the blank parts 1A, 1B, 1C are shown without the tooling fixture 10 for the sake of simplicity. In the second step of the method for manufacturing a casing 20 individual point like forces F1, F2, F3, F4, F5, F6, F7 are applied as indicated by the arrows.

The forces F1, F2, F3, F4, F5, F6, F7 are acting upon the blank parts 1A, 1B, 1C, i.e. comprising three casing elements in different planes and angles.

Those forces F1, F2, F3, F4, F5, F6, F7 result in local deformations (not shown here) and hence in a specific mechanical stress status S1 within the blank parts 1A, 1B, 1C. The stress status S1 in the blank parts 1A, 1B, 1C is the result of the application of the loads through the tooling fixtures 10 to the blank parts 1A, 1B, 1C. The stress status S1 can be three-dimensional e.g. describable through a tensor.

In alternative embodiments the forces F1, F2, F3, F4, F5, F6, F7 can act in different directions and on different planes on the blank parts 1A, 1B, 1C generating a different stress status within the blank parts 1A, 1B, 1C.

In the embodiments shown the forces F1, F2, F3, F4, F5, F6, F7 are acting point-like. In other alternatives the forces could press on a line or an area, generating a different internal mechanical stress status S1.

The forces F1, F2, F3, F4, F5, F6, F7 are generated by hydraulic, pneumatic and / or mechanical devices not shown in Figure 2B. The acting of the forces F1, F2, F3, F4, F5, F6, F7 and the stress status S1 are maintained by the tooling fixture 10 so that moving the blank parts 1A, 1B, 1C within the tooling fixture 10 does not result in a changing of the direction and the amount of the forces F1, F2, F3, F4, F5, F6, F7 and thereby changing of the stress status S1

In the third step shown in Fig. 2C the pre-stressed blank parts 1A, 1B, 1C are put into a tool machine 11 while still being in the tooling fixture 10. The forces F1, F2, F3, F4, F5, F6, F7 are still acting through their actuators (not shown here) on the blank parts 1A, 1B, 1C maintaining the stress status S1. In the pre-stressed blank parts 1A, 1B, 1C e.g. a round opening is shaped by milling with a milling tool 12 (not shown here).

Under these conditions the blank parts 1A, 1B, 1C are subjected to a machining process with a machine tool 12, like e.g. milling, grinding, drilling, honing, or turning. This means that the metal of the casing 10 is machined with a tool 12 while it is in stress state S1 and hence pre-deformed while a machined opening 3 is essentially perfectly round.

In the fourth step shown in Fig. 2D the stress status S1 is released by removing the tooling fixture 10 together with the force application devices. After the removal of the forces F1, F2, F3, F4, F5, F6, F7 the machine part comprises the casing elements 21, 22, 23 under the stress status S2, i.e. essentially the unstressed or free-stress situation.

Under this stress status S2 (i.e. the free-stress situation) the initially round opening 3 (see Fig. 2C) becomes un-rounded in a pre-defined way. The pre-determined deviation from the essentially perfect roundness of the opening is designed in a way so that in operation, the opening 3 takes on a shape which is optimized for the operation, e.g. minimizing the tip clearances. In operation, in particular at certain design points, the round opening 3 matches the movement of the rotor blades which is round as well.

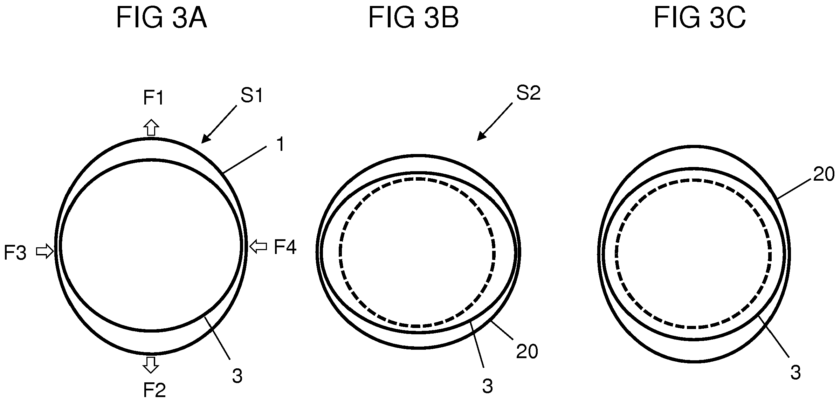

This implies that the optimal shape of the opening 3 under operation is non-round. This is further explained in Fig. 3A to 3C.

In Fig. 3A to 3C the shapes of the blank part 1 and the machined part are shown in different stages of the processing.

In Fig. 3A a schematic cross sectional view of a blank part 1 is depicted. The blank part 1 is deliberately deformed by four forces F1, F2, F3, F4. The application of the forces F1, F2, F3, F4 in the tooling process replicates or anticipates the distortion of the casing 20 under operating conditions of the turbo engine.

Forces F1, F2 are pulling away from the center elongating the blank part 1 in the vertical direction. Forces F3, F4 are pressing the blank part 1 inwards towards the center deforming the blank part 1 into an elongated or elliptical shape. In this shape the blank part 1 is under an internal mechanical stress S1. The forces F1, F2, F3, F4 are applied through the tooling fixture 10 which is not shown here.

When the blank part 1 under stress S1 is machined the opening 3 is essentially round.

Once the blank part 1 has been machined into the casing 20 or a casing element 21, 22, 23, 23, 24, 25, the tool fixture 10 is removed and the casing is assembled in the turbo engine. This static view, i.e. a not operating turbo engine, is shown schematically in Fig. 3B.

Under the mechanical stress status S2, the opening 3 becomes non-round, here elliptical. The tips of the blades of the compressor of the turbo engine are essentially on a circular path (dashed line in Fig. 3B) which at rest fitted into the non-round opening 3.

In Fig. 3C the casing 20 is shown in an operational turbo engine showing that the casing 20 becomes distorted under operation, distorting the opening 3 into a circular cross-section. The tips of the blades are also rotating on a round path (again shown in dashed line) within the opening 3 with the now circular cross-section (dashed line in Fig. 3C). The tip clearance, i.e. the distance between the path of the blade tips and the circumference of the opening 3 is constant all around the opening.

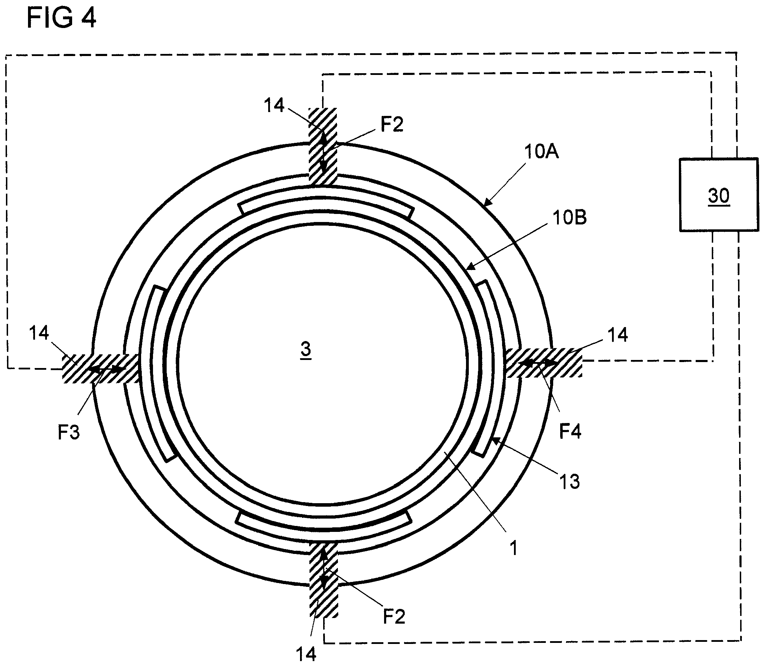

In Fig. 4 an embodiment of the tooling fixture 10 is shown to shape the casing 20 into a predetermined shape.

In the shown embodiment the tool fixture 10 comprises two parts, an outer fixture 10A and an inner fixture 10B. The blank part 1 to be machined into a casing 20 (or a casing element) is positioned within the inner fixture 10B.

Four force application locations are positioned at the circumference of the outer fixture 10A. In this embodiment the force application locations are each spread apart by 90°. In alternative embodiments the force application locations can be positioned in other arrangements.

At the force application locations deformation devices 14, e.g. screw devices 14 or hydraulic devices 14, are used to apply the forces F1, F2, F3, F4 towards the center or away from the center of the blank part 1. In other embodiments the forces can act in different directions onto the blank part.

The force application is indicated by the double arrow at the force loading locations. Unlike in the other embodiments shown above, the forces F1, F2, F3, F4 are not operating as point forces on the blank part 1 but are spread through load spreaders 13 onto the inner fixture 10B. The inner fixture 10B then applies the load onto the blank part 1 to generate the desired, predetermined deformation (not shown here).

In Fig. 3A to 3C the change of the shape was symmetrically and assumed the idealized form of a circle or an ellipse. In other embodiments the shapes of the opening 3 and / or the casing might deviate from that. So it is possible, to apply forces F1, F2, F3, F4 in an asymmetrical way, resulting in somewhat distorted shapes. By applying local deformations e.g. between 0,05 and 1,5 mm it is possible to create complex shapes.

In Fig. 4 a data processing unit 30 is schematically shown. The data processing unit provides input to the deformation devices 14 so that the information is performed so that the opening 13 has the optimal shape under operation (see Figure 3C).

The data processing unit 30 is used to control the movement of the deformation devices 14. This could be either by measuring and /or monitoring actual displacements or by controlling the level of force imparted onto the inner fixture 10B. The displacement or force limits would be predetermined to result in the desired shape of 3 prior to machining.

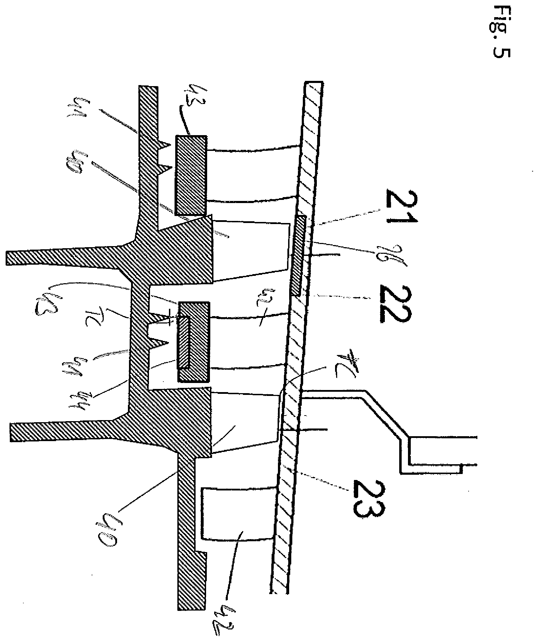

In Fig. 5 an embodiment of a casing 20 with a number of features is shown, wherein the features can be present each alone or in any combination with each other. In other aspects reference can be made to Fig. 1 and the respective description.

In Fig. 5 two tip clearances TC are indicated as examples for the tip clearances which need to be minimized. One tip clearance TC is shown between a rotor blade 40 and the casing 20. The other tip clearance TC shown is between a stator vane 42 with a shroud 43 and a liner 44 and a sealing 41 which is here shown as a fin sealing or knife sealing.

The casing 20 can comprise a liner 26 which is here shown opposite a rotor blade 40, i.e. the rotor blade 40 is in the rotor path of the casing 20. Further downstream the rotor blade 40 is in the rotor path of the casing 20 without a liner.

This shows that the embodiments of the casing 20 with or without liners 26 can in the rotor paths can be used. The stator vanes 42 can have no shrouds (so called single ended vanes or cantilevers). The stator vanes 42 can have shrouds 43 and liners 44 above a sealing 41 or shrouds 43 without liners.

It is also possible to use difference designs for the casing 20, e.g. a full ring, a split case or a segmented casing. The rotor paths in the casing 20 may be 360° or segmented in two or more (up 16) part. The segments of more than two parts would typically sit within full ring or a split case arrangement.

### List of Reference Numbers

- 1, 1A, 1B, 1C: Blank part
- 3: Opening

- 10: Tooling fixture
- 11: Tool machine
- 12: Tool
- 13: Load spreaders
- 14: Deformation device

- 20: Casing
- 21, 22, 23, 24, 25: Casing element
- 26: Casing liner

- 30: Data processing unit

- 40: Rotor blade
- 41: Sealing / Fin
- 42: Stator vane
- 43: Shroud
- 44: Liner for Shroud

- A: Casing Segment
- B: Casing Segment
- F1, F2, F3, F4, F5, F6, F7: Local forces
- S1: Predetermined stress state
- S2: Stress state after machining

- TC: Tip clearance

## Claims

1. Method for machining a casing (20) for a turbo engine, wherein
a) at least one blank part (1) for the casing (20) is positioned in a tooling fixture (10),
b) the at least one blank part (1) is mechanically stressed by at least one locally applied force (F1, F2, F3, F4, F5, F6, F7) through at least one deformation device (14) into a predetermined stress status (S1), the tooling fixture (10) maintaining the stress status (S1) in the at least one blank part (1), wherein the mechanical stressing of the at least one blank part (1) is determined by a data processing unit (30) using input data from finite element models, isothermal models or thermal models and / or using input data obtained from predetermined data, in particular experimental data, theoretical analysis and/or simulation data conducted with and / or obtained from with the casing (20) of the turbo engine, and wherein the data processing unit (30) is used to control the movement of the deformation device (14);
c) the at least one blank part (1) in the stress state (S1) is subjected to a machining process,
d) the stress status (S1) is released after the completion of the machining process so that the machined part takes on the shape determined by the internal stress (S2) without the at least one locally applied force (F1, F2, F3, F4, F5, F6, F7).

2. Method according to claim 1, wherein a tool (12) of a tool machine (11) is mechanically stressed by at least one locally applied force (F1, F2, F3, F4, F5, F6, F7) into a predetermined stress status (S1).

3. Method according to claim 1 or 2, wherein the casing (20) is a part of a turbo engine, in particular an aircraft engine or a gas turbine.

4. Method according to at least one of the preceding claims, wherein the casing (20) comprises a 'split' case design or segmented casings.

5. Method according to at least one of the preceding claims, wherein the machining process is a turning process, a milling process, a lapping process, a honing process and / or a grinding process.

6. Method according to at least one of the preceding claims, wherein the mechanical stressing of the at least one blank part (1) is performed by at least one force (F1, F2, F3, F4, F5, F6, F7) with a point load and / or by at least one force (F1, F2, F3, F4, F5, F6, F7) with an area load through the at least one deformation device (14).

7. Method according to at least one of the preceding claims, wherein the mechanical stressing of the at least one blank part (1) is performed by a hydraulic device, a pneumatic device and / or a mechanical device, in particular a screw device.

8. Method according to at least one of the preceding claims, wherein the predetermined stress status (S1) in the blank part (1) comprises at least one local deformation between 0.05 and 1.5 mm.

9. Method according to at least one of the preceding claims, wherein the at least one blank part (1) is subjected to a mechanical stress in at least two points, up to 10 points.

10. Method according to at least one of the preceding claims, wherein the at least one blank part (1) is subjected to mechanical stress essentially perpendicular to the surface of the at least one blank part (1).

11. Method according to at least one of the preceding claims, wherein the blank part (1) is subjected to mechanical stress from the outside of the at least one blank part (1) pointing towards the inside and / or from the inside of the at least one blank part (1) pointing towards the outside.

12. Method according to at least one of the preceding claims, wherein the casing has essentially a cylindrical shape, in particular with a circular cross-section or the shape of a part of the cylindrical shape.

## Patentansprüche

1. Verfahren zur Bearbeitung eines Gehäuses (20) für ein Turbinentriebwerk, wobei
a) mindestens ein Rohteil (1) für das Gehäuse (20) in einer Bearbeitungsaufnahme (10) positioniert wird,
b) das zumindest eine Rohteil (1) mechanisch durch mindestens eine lokal einwirkende Kraft (F1, F2, F3, F4, F5, F6, F7) mittels mindestens einer Verformungsvorrichtung (14) in einen vorgegebenen Belastungszustand (S1) gebracht wird, während die Bearbeitungsaufnahme (10) den Belastungszustand (S1) im zumindest einen Rohteil (1) aufrechterhält, wobei die mechanische Belastung des zumindest einen Rohteils (1) durch eine Datenverarbeitungseinheit (30) bestimmt wird, welche ihrerseits Eingangsdaten von Finite-Elemente-Modellen, isothermischen Modellen oder thermischen Modellen verwendet und/ oder Eingangsdaten von vorher ermittelten Daten, insbesondere Versuchsdaten, Daten von theoretischen Analysen, und/oder Simulationen, die am Gehäuse (20) des Turbinentriebwerks vorgenommen und/oder von ihm geliefert wurden, und wobei die Datenverarbeitungseinheit (30) dazu verwendet wird, die Bewegung der Verformungsvorrichtung (14) zu steuern,
c) das zumindest eine Rohteil (1) im Belastungszustand (S1) einem Bearbeitungsverfahren unterzogen wird,
d) der Belastungszustand (S1) nach Abschluss des Bearbeitungsverfahrens aufgehoben wird, so dass das bearbeitete Teil die durch die innere Spannung (S2) vorgegebene Form einnimmt, ohne die zumindest eine lokal einwirkende Kraft (F1, F2, F3, F4, F5, F6, F7).

2. Verfahren nach Anspruch 1, wobei ein Werkzeug (12) einer Werkzeugmaschine (11) mechanisch durch mindestens eine lokal einwirkende Kraft (F1, F2, F3, F4, F5, F6, F7) in einen vorgegebenen Belastungszustand (S1) gebracht wird.

3. Verfahren nach Anspruch 1 oder 2, wobei das Gehäuse (20) Teil eines Turbinentriebwerks ist, insbesondere eines Flugzeugtriebwerks oder einer Gasturbine.

4. Verfahren nach mindestens einem der vorangehenden Ansprüche, wobei das Gehäuse (20) ein "geteiltes" Gehäusedesign oder segmentierte Gehäuse umfasst.

5. Verfahren nach mindestens einem der vorangehenden Ansprüche, wobei es sich beim Bearbeitungsverfahren um einen Drehvorgang, einen Fräsvorgang, einen Läppvorgang, einen Honvorgang und/oder einen Schleifvorgang handelt.

6. Verfahren nach mindestens einem der vorangehenden Ansprüche, wobei die mechanische Belastung des zumindest einen Rohteils (1) durch mindestens eine Kraft (F1, F2, F3, F4, F5, F6, F7) mit einer Punktlast und/oder durch mindestens eine Kraft (F1, F2, F3, F4, F5, F6, F7) mit einer Flächenlast über die mindestens eine Verformungsvorrichtung (14) erfolgt.

7. Verfahren nach mindestens einem der vorangehenden Ansprüche, wobei die mechanische Belastung des mindestens einen Rohteils (1) durch eine hydraulische Vorrichtung, eine pneumatische Vorrichtung und/oder eine mechanische Vorrichtung, insbesondere eine Schraubvorrichtung erfolgt.

8. Verfahren nach mindestens einem der vorangehenden Ansprüche, wobei der vorgegebene Belastungszustand (S1) im Rohteil (1) zumindest eine örtliche Verformung zwischen 0,05 und 1,5 mm beinhaltet.

9. Verfahren nach mindestens einem der vorangehenden Ansprüche, wobei das zumindest eine Rohteil (1) einer mechanischen Belastung in zumindest zwei Punkten, max. 10 Punkten unterzogen wird.

10. Verfahren nach mindestens einem der vorangehenden Ansprüche, wobei das zumindest eine Rohteil (1) einer mechanischen Belastung im Wesentlichen senkrecht zur Oberfläche des zumindest einen Rohteils (1) unterzogen wird.

11. Verfahren nach mindestens einem der vorangehenden Ansprüche, wobei das Rohteil (1) einer mechanischen Belastung von der Außenseite des zumindest einen Rohteils (1) zur Innenseite hin und/oder von der Innenseite des zumindest einen Rohteils (1) zur Außenseite hin unterzogen wird.

12. Verfahren nach mindestens einem der vorangehenden Ansprüche, wobei das Gehäuse im Wesentlichen eine zylindrische Form besitzt, insbesondere mit einem kreisförmigen Querschnitt, oder die Form eines Teils der zylindrischen Form.

## Revendications

1. Procédé d'usinage d'un carter (20) pour un moteur à turbine, sachant
a) qu'au moins une pièce brute (1) pour le carter (20) est positionnée dans une fixation d'outils (10),
b) que ladite au moins une pièce brute (1) est contrainte mécaniquement par au moins une force appliquée localement (F1, F2, F3, F4, F5, F6, F7) par le biais d'au moins un dispositif de déformation (14) pour atteindre un état de contrainte prédéterminé (S1), la fixation d'outils (10) maintenant l'état de contrainte (S1) dans ladite au moins une pièce brute (1), sachant que la contrainte mécanique de ladite au moins une pièce brute (1) est déterminée par une unité de traitement de données (30) utilisant des données d'entrée provenant de modèles d'éléments finis, de modèles isothermiques ou de modèles thermiques et/ou utilisant des données d'entrée obtenues à partir de données prédéterminées, notamment de données expérimentales, de données d'analyses théoriques et/ou de données de simulations réalisées avec et/ou obtenues à partir du carter (20) du moteur à turbine, et sachant que l'unité de traitement des données (30) est utilisée pour contrôler le mouvement du dispositif de déformation (14),
c) que ladite au moins une pièce brute (1) à l'état de contrainte (S1) est soumise à un procédé d'usinage,
d) que l'état de contrainte (S1) est relâché après l'achèvement du procédé d'usinage de manière à ce que la pièce usinée prenne la forme déterminée par la contrainte interne (S2) sans ladite au moins une force appliquée localement (F1, F2, F3, F4, F5, F6, F7).

2. Procédé selon la revendication n° 1, sachant qu'un outil (12) d'une machine-outil (11) est contraint mécaniquement par au moins une force appliquée localement (F1, F2, F3, F4, F5, F6, F7) dans un état de contrainte prédéterminé (S1).

3. Procédé selon la revendication n° 1 ou n° 2, sachant que le carter (20) fait partie d'un moteur à turbine, notamment d'un moteur d'avion ou d'une turbine à gaz.

4. Procédé selon au moins une des revendications précédentes, sachant que le carter (20) est conçu sous forme de carter « fendu » ou de carters segmentés.

5. Procédé selon au moins une des revendications précédentes, sachant que le procédé d'usinage est un procédé de tournage, un procédé de fraisage, un procédé de rodage, un procédé de pierrage et/ou un procédé de meulage.

6. Procédé selon au moins une des revendications précédentes, sachant que la contrainte mécanique de ladite au moins une pièce brute (1) est réalisée par au moins une force (F1, F2, F3, F4, F5, F6, F7) avec une charge ponctuelle et/ou par au moins une force (F1, F2, F3, F4, F5, F6, F7) avec une charge répartie par le biais dudit au moins un dispositif de déformation (14).

7. Procédé selon au moins une des revendications précédentes, sachant que la contrainte mécanique de ladite au moins une pièce brute (1) est réalisée par un dispositif hydraulique, un dispositif pneumatique et/ ou un dispositif mécanique, notamment par un dispositif à vis.

8. Procédé selon au moins une des revendications précédentes, sachant que l'état de contrainte prédéterminé (S1) dans la pièce brute (1) comprend au moins une déformation locale comprise entre 0,05 et 1,5 mm.

9. Procédé selon au moins une des revendications précédentes, sachant que ladite au moins une pièce brute (1) est soumise à une contrainte mécanique dans au moins deux points, jusqu'à 10 points.

10. Procédé selon au moins une des revendications précédentes, sachant que ladite au moins une pièce brute (1) est soumise à une contrainte mécanique essentiellement perpendiculaire à la surface de ladite au moins une pièce brute (1).

11. Procédé selon au moins une des revendications précédentes, sachant que la pièce brute (1) est soumise à une contrainte mécanique partant de l'extérieur de ladite au moins une pièce brute (1) vers l'intérieur et/ ou de l'intérieur de ladite au moins une pièce brute (1) vers l'extérieur.

12. Procédé selon au moins une des revendications précédentes, sachant que le carter a essentiellement une forme cylindrique, notamment avec une section circulaire ou la forme d'une partie de la forme cylindrique.
